# EUROPEAN PATENT SPECIFICATION

(11) **EP 1 024 698 B1**
(45) Date of publication and mention of the grant of the patent: **02.03.2005**
(21) Application number: 98945407.9
(22) Date of filing: 30.09.1998
(51) Int. Cl.: A01N 45/00, A01K 97/04

(54) **PHEROMONE COMPOSITION**
PHEROMON-ZUSAMMENSETZUNG
COMPOSITION A BASE DE PHEROMONES

(30) Priority: 01.10.1997 GB 9720814
(43) Date of publication of application: 09.08.2000
(73) Proprietor: Kiotech Limited, London, NW1 2BW (GB)
(72) Inventor: DODD, George, Henry, Mellon Charles Aultbea IU22 2JE (GB)
(74) Representative: McNally, Roisin
(86) International application number: PCT/GB1998/002941
(87) International publication number: WO 1999/016315

(56) References cited:
- EP-A- 0 219 416
- EP-A- 0 280 443
- WO-A-83/00417
- WO-A-85/05014
- FR-A- 582 224
- FR-A- 2 561 871

## Description

The invention relates to compositions formulated to attract fish, in order to capture them. More particularly the composition may be used in a liquid form to be applied onto or into bait, lures or flies which are used by anglers and commercial fishermen alike.

Angling and fishing are sports which attract a large number of people. A wide range of bait, lures and flies are marketed at these persons in order to provide them with more success in catching fish.

Some organic compounds are known to be active in the feeding response of some species by enhancing feeding or attracting fish to a general area. They are known to occur at low concentration levels in crustacea and also in a range of decomposing animals. Such compounds are small organic odorants.

It has been reported that women have a greater success rate in catching salmon than male anglers (*see Salmon and women, W. Paterson* & P. Behan, published by H, F & G Witherby Ltd 1990).

It is an object of the invention to provide a composition showing enhanced attracting effects on fish.

It is another object of the invention to provide a method to attract fish by using the composition of the invention.

It is a further object of the invention to provide the composition of the invention to be applied to bait (live or dead), lures or flies (dry or wet) used in the practise of angling or commercial fishing.

FR-A-2561871 discloses methods of attracting fish by simulating the compounds given off by fish or other marine animals, which indicate their presence to other fish. Compounds found to have significant effects are eg. trimethylamine, indole, scatole, putrescine and cadaverine.

EP-A-219416 discloses methods and compositions for attracting fish, which contain at least an amine and a second compound chosen from amino acids, urea and amides.

FR-A-582224 discloses attractant/bait compositions for fish, containing ammonia or its amine derivatives or trimethylamine.

EP-A-280443 discloses repellent compositions for deer containing compounds extracted from lion faeces. These compounds include alkanoic acids, indoles, amines.

WO-A-8505014 discloses baits pellets for fish, containing fish attractants such as methylamine, with carriers.

WO-A-8300417 discloses the use of human pheromones such as androstene steroids as animal repellents.

It has surprisingly been found that compositions containing at least one human female pheromone presents an unexpectedly good attractive effect on fish, and particularly on salmon. Such compositions may be applied on any kind of bait used by anglers and fishermen.

Herein the term "pheromone" is taken to include amines such as trimethylamine and pyrroline, and salts thereof, steroids of the androstene family such as 5-alpha-androst-16-en-3-α-ol, heterocyclic compounds including nitrogen and/or sulphur such as indole and skatole and alkanoic acid compounds such as 4-methyloctanoic acid.

The objects of the invention are achieved with a fish attracting composition comprising at least one human female pheromone, or a synthetic nature-similar version of the latter.

According to a first aspect of the invention, there is provided a fish attracting composition comprising at least one human female pheromone, or a synthetic version thereof, wherein the pheromone is at least trimethylamine and the composition further comprises at least one compound chosen from a complex array of alkanoic acids, wherein the compound is a substituted alkanoic acid having a carbon atom number in the range C8 to C10.

According to a second aspect of the invention, there is provided the use of the fish attracting composition according to the first aspect of the invention in the application to fish bait, lures, or flies for fishing or angling.

According to a third aspect of the invention, there is provided the use of a fish attracting composition in the application to fish bait, lures, or flies for fishing or angling, wherein the fish attracting composition comprises a pheromone, a substituted alkanoic acid having a carbon atom number in the range C8 to C10 and amines, wherein said pheromone is trimethylamine, indole or skatole.

According to a fourth aspect of the invention, there is provided fish bait, lure or flies used for fishing or angling, to which is applied the fish attracting composition according to the first aspect of the invention.

According to a fifth aspect of the invention, there is provided fish bait, lure, or flies to which is applied a fish attracting composition comprising a pheromone, a substituted alkanoic acid having a carbon atom number in the range C8 to C10 and amines, wherein said pheromone is trimethylamine, indole or skatole.

According to a sixth aspect of the invention, there is provided the use of the fish attracting composition according to the first aspect of the invention in the application to hooks for fishing or angling, wherein the composition is a liquid.

According to a seventh aspect of the invention, there is provided the use of a fish attracting composition in the application to hooks for fishing or angling, wherein the fish attracting composition is a liquid comprising a pheromone, a substituted alkanoic acid having a carbon atom number in the range C8 to C10 and amines, wherein said pheromone is trimethylamine, indole or skatole.

According to an eighth aspect of the invention, there is provided hooks used for fishing or angling, to which is applied the fish attracting composition according to the first aspect of the invention, wherein the composition is a liquid.

According to a ninth aspect of the invention, there is provided hooks used for fishing or angling to which is applied a fish attracting composition, wherein the composition is a liquid comprising a pheromone, a substituted alkanoic acid having a carbon atom number in the range C8 to C10 and amines, wherein said pheromone is trimethylamine, indole or skatole.

The composition can comprise at least one female human pheromone a synthetic female phenomena with a carrier. Preferably the carrier solubilises the compound.

Preferred carriers include aliphatic alcohols such as ethanol, monoethylene glycol and propylene glycol.

It is preferred that the pheromone used in the composition of the invention be at least trimethylamine together with at least one compound chosen from a complex array of alkanoic acids, wherein the alkanoic acid is a substituted alkanoic acid having a carbon atom number ranging from C8 to C10.

A preferred composition according to the invention may comprise in association with nature-similar versions of human female pheromones, a suite of other potent aroma chemicals (referred to herein as Key Impact Odorants [KIOs]) which occur in both fresh and decomposing animal tisue.

These other KIOs can be special amines and associated heterocyclic compounds including nitrogen and sulphur such as indole and skatole. It is also preferred that the odorant compounds be provided with concentrations of several order of magnitude higher than the ones which are found in conventional bait.

The composition of the invention can be used in various embodiments.

In one embodiment the composition is a liquid which bait, lure, fly, ground bait and/or hooks can be dipped into or the liquid can be poured onto the bait, lure, fly, ground bait and/or hooks.

The composition of the invention may also be formulated as a spray to allow easy manipulation by the users and could either be hand pumped or gas driven.

In a preferred embodiment the composition is formulated to be injected into bait.

Alternatively the composition can be incorporated into plastic bait.

To attract fish one may apply the composition of the invention on a bait or a suitable support and provide it in area where fish are used to be found.

The composition may also be applied directly onto bare hooks.

The composition of the invention can be formulated for a wide range of applications including combining with floatant, spraying flies, combining with greasing or degreasing agents to enable bait to float or sink as required.

The formulation can also be combined with ground bait and dried for storage purposes.

Formulations of the present invention are surprisingly effective in aqueous solution. Whereas a preferred carrier is ethanol and a basic formulation can include a salt of trimethylamine in ethanol, in use the formulation produces trimethylamine on contact with water. In fishing, the formulation will be vastly diluted in water and therefore it is most surprising that use of the formulation can effectively enhance fishing.

The pheromones which may be advantageously used in a composition according to the invention include the following:

Trimethylamine (TMA) (as derived from a salt of trimethylamine such as the hydrochloride) is an exceptionally interesting KIO pheromone. It occurs on human skin and is especially important for females. It is the characteristic odour of a menstruating female. The odour profile is distinctive and is not shared by closely related amines such as, for example, dimethylamine. The aroma is that of fresh shell fish at the threshold level. In fact it is thought that most of the charm of oyster, scallops and the like comes from TMA. The aroma changes with increasing concentration and becomes increasingly unpleasant. At a high level TMA will be perceived as an off-odour in shell fish and the like, and as a sign of lack of hygiene in a human subject.

The threshold concentration for humans is about 1ppb (1 part in 10⁹) - this is low by olfactory standards. There is, in fact, great individual variability and the concentration varies around the mean figure by about 3 orders of magnitude. This gives rise to great variability; for example, a crustacean may appear delightful to a person of high threshold but may be abhorrent to a person of low threshold (skin sensitivity). See in that matter "Ageing and the Sense of Smell" C, Van Toller, GH Dodd & A Billing, Charles T Thomas, Publisher, Springfield, Illinois, USA, 1985.

Another interesting pheromone which may be used in the fish-attracting composition is 1-Pyrroline. This is a rare and little studied human pheromone- It is unstable and therefore very difficult to study. It is formed by oxidation of precursor molecules such as 1,4-diaminobutane and 1,4-diaminopentane. These amines occur in a variety of human tissues, and can be formed from appropriate amino acids.

In order to overcome the instability problem when 1-Pyrroline is to be used in a fish-attracting composition of the inverltion, the parent amines (i.e. the above mentioned precursors) are incorporated at a high level in the composition. They will slowly oxidize and release the unstable active odorant.

These parent amines are also called respectively, putrescine and cadaverine, for obvious olfactory reasons and occurred in decomposing animal tissue. The human threshold is in the ppb range.

A further pheromone which may be used in the invention is the 5-alpha-androst-16-en-3-α-p1. This pheromone is a well-known pheromone which is found in both males and females but is thought to be more important for women (in contrast to the related steroid pheromone, alpha-androstenone). The threshold for human is in the low ppb range. The odour is usually described as musky.

A still further preferred pheromone which may be used in the compsition of the invention is 4-Methylactanoic acid which is characteristic of the scalp odour and may be found in gamey meat. The threshold is unusually low for a fatty acid and is in the region of ppb. It is has been reported that women are much more sensitive to this odorant than men.

A particular composition according to the invention has been tested in fishing experiments on the River Ness, other rivers in the Highlands, and in Ireland and on a variety of Lochs. Positive results have been obtained.

The composition of this particular non-limiting composition is the following :

| **Component No** | **Name** | **Amount Required for 1000 litres of solvent (ethanol)** |
|---|---|---|
| 1 | Trimethylamine hydrochloride | 7kg |
| 2 | 1,4 diaminobutane | 0.7kg |
| 3 | 1,4 diaminopentane | 0.1kg |
| 4 | indole | 50 grm |
| 5 | skatole | 40 grm |
| 6 | isovaleric acid | 40 grm |
| 7 | 4-methyloctanoic acid | 10 grm |
| 8 | 4-methylnonanoic acid | 5 grm |
| 9 | phenylacetic acid | 20 grm |
| 10 | 2-methyl-E-butenoic acid | 5 grm |
| 11 | 4-methylpentanoic acid | 10 grm |
| 12 | 2-methyl-2-pentenoic acid | 10 grm |
| 13 | 5-alpha-androst-16-en-3-α-ol | 60 mg-6g |

A more general preferred composition comprises

| **Component No** | **Name** | **Amount Required for 1000 litres of solvent** |
|---|---|---|
| 1 | KIO Pheromone | 0.05-50kg |
| 2 | Alkanoic acid | 5g-1.5kg |
| 3 | Amines | 0.1kg-8kg |

Even if a special emphasis has been given on the utility of the composition in order to ease fishing it is understood that the composition to attract fish as above described may be used for other purposes. For example it may be used to attract salmon into special paths provided in order to help them to cross dams, waterfalls or other obstructions.

### Experimental Study

An initial study was carried out to establish a relationship between the use of female pheremones at a chosen concentration and the increase in the catch of salmon, either by fish size or numbers caught using the conventional rod and line method with a selected range of hand tied salmon flies.

Three specialist salmon fly fishermen were chosen who regularly fished prime salmon rivers, have extensive combined specialist knowledge gained from 20 years of fly fishing, fish a regular pattern over the entire season, have experience of observing changes and variations in fish runs and catch methods and were willing to comply with strict rules with regard to reporting procedures.

Rivers chosen for the study covered the entire salmon cycle, i.e Spring-Summer and Autumn salmon runs, January-September 1997.

### Results

Some interesting findings came to light at the season end:

Of the three subjects chosen, all had a significant change in their catch pattern, (1) 43 salmon caught (2) 75 salmon caught (3) 15 salmon caught.

Subjects (1) and (2) fly fished the middle/upper reaches of a major salmon river. The river is world famous for the range of salmon fishing available. Spring salmon run (10-251bs) is moderate. Large runs of Summer grilse (3-8 lbs) and a good run of Autumn salmon (10-30 lbs).

Subject (3) fly fished a major East Coast spring salmon fishery (10-30 lbs) This river has small runs of summer salmon owing to licensed commercial fishing in estuary waters.

In all cases the reports returned were similar with more consistent catches particulary when fish were in holding pools (when water levels receded after floods).

| Catch summary (Salmon caught) | | |
|---|---|---|
| Subject | 1996 | 1997 |
| (1) | 37 | 75 |
| (2) | 18 | 43 |
| (3) | 9 | 15 |

No exceptional fish size was reported over that of the 1996 season.

Water levels for 1997 were consistently high by comparison to 1996 resulting in concentration of several salmon runs in holding pools throughout the entire river system.

Current information on official commercial salmon catch ventures for 1997 would indicate a 20% reduction on the 1996 season.

Water temperatures were slightly higher than previous years.

Most salmon for this study were caught on an imitation shrimp fly dressing of various sizes.

All subjects chosen for this study were male with average age of 45 years.

All subjects chosen tie their own flies, however, similar selected shrimp/prawn flies were distributed to all.

Salmon flies used were purchased from local fishing tackle shops.

The final results of this initial trial study would indicate some relationship between the choice of fly with sample female pheromone and the traditional fly fishing method.

One fisherman has fished for Sea Bass (commonly known as Salmon Bass) off the east coast for many years, with varying success. This specialist fishing activity fished off chosen rocky points in July/August would normally yield 1-2 fish per outing. This year, using identical fishing lures, substantially improved bass catches were recorded with better than average sizes using the female pheromone formulation described herein. Other specialist bass anglers fishing the same waters did not use the formulation and did not return above average catches.

## Claims

1. A fish attracting composition comprising at least one human female pheromone, or a synthetic version thereof, wherein the pheromone is at least trimethylamine and the composition further comprises at least one compound chosen from a complex array of alkanoic acids, wherein the compound is a substituted alkanoic acid having a carbon atom number in the range C8 to C10.

2. The fish attracting composition according to claim 1, wherein the substituted alkanoic acid is 4-methyloctanoic acid.

3. A composition as claimed in claim 1 or claim 2 further comprising an acceptable carrier.

4. A composition as claimed in claim 3 wherein the carrier is an aliphatic alcohol or propylene glycol.

5. A composition as claimed in any of the preceding claims wherein the composition is a liquid.

6. A composition as claimed in any of the preceding claims which is formulated for injection into bait.

7. A composition as claimed in any of claims 1 to 5 which is formulated as a spray.

8. Plastic bait including the composition as claimed in any of claims 1 to 5.

9. Dried ground bait including a composition as claimed in any of claims 1 to 5.

10. Use of the fish attracting composition according to claim 1 or claim 2 in the application to fish bait, lures or flies for fishing or angling.

11. Use of the fish attracting composition according to claim 1 or claim 2 in the application to hooks for fishing or angling, wherein the composition is a liquid.

12. Use of a fish attracting composition in the application to fish bait, lures or flies for fishing or angling, wherein the fish attracting composition comprises a pheromone, a substituted alkanoic acid having a carbon atom number in the range C8 to C10 and amines, wherein said pheromone is trimethylamine, indole or skatole.

13. Use of a fish attracting composition in the application to hooks for fishing or angling, wherein the fish attracting composition is a liquid comprising a pheromone, a substituted alkanoic acid having a carbon atom number in the range C8 to C10 and amines, wherein said pheromone is trimethylamine, indole or skatole.

14. The use according to claim 12 or claim 13 wherein the alkanoic acid is 4-methyloctanoic acid.

15. Fish bait, lure, or flies used for fishing or angling, to which is applied the fish attracting composition according to claim 1.

16. Fish bait, lure or flies used for fishing or angling to which is applied a fish attracting composition comprising a pheromone, a substituted alkanoic acid having a carbon atom number in the range C8 to C10 and amines, wherein said pheromone is trimethylamine, indole or skatole.

17. Hooks used for fishing or angling, to which is applied the fish attracting composition according to claim 1, wherein the composition is a liquid.

18. Hooks used for fishing or angling to which is applied a fish attracting composition, wherein the composition is a liquid comprising a pheromone, a substituted alkanoic acid having a carbon atom number in the range C8 to C10 and amines, wherein said pheromone is trimethylamine, indole or skatole.

19. The fish bait, lure or flies according to claim 15 or claim 16, or the hooks according to claim 17 or claim 18 wherein the alkanoic acid is 4-methyloctanoic acid.

## Patentansprüche

1. Eine Zusammensetzung zum Anlocken von Fischen, die mindestens ein humanes, weibliches Pheromon oder eine synthetische Version davon beinhaltet, wobei das Pheromon mindestens Trimethylamin ist, und wobei die Zusammensetzung ferner mindestens eine Verbindung, die aus einer komplexen Anordnung von Alkansäuren ausgewählt ist, beinhaltet, wobei die Verbindung eine substituierte Alkansäure ist, die eine Kohlenstoffordnungszahl in dem Bereich zwischen C8 und C10 aufweist.

2. Zusammensetzung zum Anlocken von Fischen gemäß Anspruch 1, wobei die substituierte Alkansäure 4-Methyloctansäure ist.

3. Zusammensetzung gemäß Anspruch 1 oder Anspruch 2, die ferner einen annehmbaren Träger beinhaltet.

4. Zusammensetzung gemäß Anspruch 3, wobei der Träger ein aliphatischer Alkohol oder Propylenglykol ist.

5. Zusammensetzung gemäß einem der vorhergehenden Ansprüche, wobei die Zusammensetzung eine Flüssigkeit ist.

6. Zusammensetzung gemäß einem der vorhergehenden Ansprüche, die zur Injektion in den Köder formuliert ist.

7. Zusammensetzung gemäß einem der Ansprüche 1 bis 5, die als ein Spray formuliert ist.

8. Ein die Zusammensetzung gemäß einem der Ansprüche 1 bis 5 einschließender Kunststoffköder.

9. Ein getrockneter gemahlener, eine Zusammensetzung gemäß einem der Ansprüche 1 bis 5 einschließender Köder.

10. Die Verwendung der Zusammensetzung zum Anlocken von Fischen gemäß Anspruch 1 oder Anspruch 2 bei der Anwendung auf Fischköder, Lockmittet oder Fliegen zum Fischen oder Angeln.

11. Die Verwendung der Zusammensetzung zum Anlocken von Fischen gemäß Anspruch 1 oder Anspruch 2 bei der Anwendung auf Haken zum Fischen oder Angeln, wobei die Zusammensetzung eine Flüssigkeit ist.

12. Die Verwendung einer Zusammensetzung zum Anlocken von Fischen bei der Anwendung auf Fischköder, Lockmittel oder Fliegen zum Fischen oder Angeln, wobei die Fisch anlockende Zusammensetzung ein Pheromon, eine substituierte Alkansäure, die eine Kohlenstoffordnungzahl in dem Bereich zwischen C8 und C10 aufweist, und Amine beinhaltet, wobei das Pheromon Trimethylamin, Indol oder Skatol ist.

13. Die Verwendung einer Zusammensetzung zum Anlocken von Fischen bei der Anwendung auf Haken zum Fischen oder Angeln, wobei die Fisch anlockende Zusammensetzung eine Flüssigkeit ist, die ein Pheromon, eine substituierte Alkansäure, die eine Kohlenstoffordnungzahl in dem Bereich zwischen C8 und C10 aufweist, und Amine beinhaltet, wobei das Pheromon Trimethylamin, Indol oder Skatol ist.

14. Verwendung gemäß Anspruch 12 oder Anspruch 13, wobei die Alkansäure 4-Methyloctansäure ist.

15. Fischköder, Lockungsmittel oder Fliegen, die zum Fischen oder Angeln verwendet werden, auf welche die Zusammensetzung zum Anlocken von Fischen gemäß Anspruch 1 angewendet wird.

16. Fischköder, Lockmittel oder Fliegen, die zum Fischen oder Angeln verwendet werden, auf welche eine Zusammensetzung zum Anlocken von Fischen angewendet wird, die ein Pheromon, eine substituierte Alkansäure, die eine Kohlenstoffordnungzahl in dem Bereich zwischen C8 und C10 aufweist, und Amine beinhaltet, wobei das Pheromon Trimethylamin, Indol oder Skatol ist.

17. Haken, die zum Fischen oder Angeln verwendet werden, auf welche die Zusammensetzung zum Anlocken von Fischen gemäß Anspruch 1 angewendet wird, wobei die Zusammensetzung eine Flüssigkeit ist.

18. Haken, die zum Fischen oder Angeln verwendet werden, auf welche eine Zusammensetzung zum Anlocken von Fischen angewendet wird, wobei die Zusammensetzung eine Flüssigkeit ist, die ein Pheromon, eine substituierte Alkansäure, die eine Kohlenstoffordnungzahl in dem Bereich zwischen C8 und C10 aufweist, und Amine beinhaltet, wobei das Pheromon Trimethylamin, Indol oder Skatol ist.

19. Fischköder, Lockmittel oder Fliegen gemäß Anspruch 15 oder Anspruch 16 oder die Haken gemäß Anspruch 17 oder Anspruch 18, wobei die Alkansäure 4-Methyloctansäure ist.

## Revendications

1. Une composition attirant les poissons comportant au moins une phéromone femelle humaine, ou une version synthétique de celle-ci, dans laquelle la phéromone est au moins la triméthylamine et la composition comporte de plus au moins un composé choisi dans un ensemble complexe d'acides alcanoïques, dans laquelle le composé est un acide alcanoïque substitué ayant un nombre d'atomes de carbone dans la gamme allant de C8 à C10.

2. La composition attirant les poissons selon la revendication 1, dans laquelle l'acide alcanoïque substitué est l'acide 4-méthyloctanoïque.

3. Une composition telle que revendiquée dans la revendication 1 ou la revendication 2 comportant de plus un support acceptable.

4. Une composition telle que revendiquée dans la revendication 3 dans laquelle le support est un alcool aliphatique ou du propylène glycol.

5. Une composition telle que revendiquée dans n'importe lesquelles des revendications précédentes dans laquelle la composition est un liquide.

6. Une composition telle que revendiquée dans n'importe lesquelles des revendications précédentes qui est formulée pour être injectée dans un appât.

7. Une composition telle que revendiquée dans n'importe lesquelles des revendications 1 à 5 qui est formulée sous forme d'un spray.

8. Appât en plastique comprenant la composition telle que revendiquée dans n'importe lesquelles des revendications 1 à 5.

9. Appât de fond séché comprenant une composition telle que revendiquée dans n'importe lesquelles des revendications 1 à 5.

10. Utilisation de la composition attirant les poissons selon la revendication 1 ou la revendication 2 dans l'application pour appât pour poissons, leurres ou mouches pour la pêche de loisir ou la pêche à la ligne.

11. Utilisation de la composition attirant les poissons selon la revendication 1 ou la revendication 2 dans l'application pour des hameçons pour la pêche de loisir ou la pêche à la ligne, dans laquelle la composition est un liquide.

12. Utilisation d'une composition attirant les poissons dans l'application pour appât pour poissons, leurres ou mouches pour la pêche de loisir ou la pêche à la ligne, dans laquelle la composition attirant les poissons comporte une phéromone, un acide alcanoïque substitué ayant un nombre d'atomes de carbone dans la gamme allant de C8 à C10 et des amines, dans laquelle ladite phéromone est la triméthylamine, l'indole ou le scatole.

13. Utilisation d'une composition attirant les poissons dans l'application pour des hameçons pour la pêche de loisir ou la pêche à la ligne dans laquelle la composition attirant les poissons est un liquide comportant une phéromone, un acide alcanoïque substitué ayant un nombre d'atomes de carbone dans la gamme allant de C8 à C10 et des amines, dans laquelle ladite phéromone est la triméthylamine, l'indole ou le scatole.

14. L'utilisation selon la revendication 12 ou la revendication 13 dans laquelle l'acide alcanoïque est l'acide 4-méthyloctanoïque.

15. Appât pour poissons, leurre, ou mouches utilisés pour la pêche de loisir ou la pêche à la ligne, auxquels est appliquée la composition attirant les poissons selon la revendication 1.

16. Appât pour poissons, leurre ou mouches utilisés pour la pêche de loisir ou la pêche à la ligne, auxquels est appliquée une composition attirant les poissons comportant une phéromone, un acide alcanoïque substitué ayant un nombre d'atomes de carbone dans la gamme allant de C8 à C10 et des amines, dans lesquels ladite phéromone est la triméthylamine, l'indole ou le scatole.

17. Hameçons utilisés pour la pêche de loisir ou la pêche à la ligne, auxquels est appliquée la composition attirant les poissons selon la revendication 1, dans lesquels la composition est un liquide.

18. Hameçons utilisés pour la pêche de loisir ou la pêche à la ligne auxquels est appliquée une composition attirant les poissons, dans lesquels la composition est un liquide comprenant une phéromone, un acide alcanoïque substitué ayant un nombre d'atomes de carbone dans la gamme allant de C8 à C10 et des amines, dans lesquels ladite phéromone est la triméthylamine, l'indole ou le scatole.

19. L'appât pour poissons, le leurre ou les mouches selon la revendication 15 ou la revendication 16, ou les hameçons selon la revendication 17 ou la revendication 18 dans lesquels l'acide alcanoïque est l'acide 4-méthyloctanoïque.
